(19) Europäisches Patentamt / European Patent Office / Office européen des brevets

(11) **EP 2 990 109 B1**

(12) **EUROPEAN PATENT SPECIFICATION**

(45) Date of publication and mention of the grant of the patent:
**23.10.2019 Bulletin 2019/43**

(21) Application number: **14788381.3**

(22) Date of filing: **14.04.2014**

(51) Int Cl.:
*H01M 4/92* (2006.01)　　　*H01M 8/1018* (2016.01)

(86) International application number:
**PCT/JP2014/060646**

(87) International publication number:
**WO 2014/175106 (30.10.2014 Gazette 2014/44)**

(54) **CATALYST AND ELECTRODE CATALYST LAYER FOR FUEL CELL HAVING THE CATALYST**

KATALYSATOR UND ELEKTRODENKATALYSATORSCHICHT FÜR BRENNSTOFFZELLEN MIT DEM KATALYSATOR

CATALYSEUR ET COUCHE DE CATALYSEUR D'ÉLECTRODE DESTINÉE À DES PILES À COMBUSTIBLE AYANT LE CATALYSEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.04.2013 JP 2013092937**

(43) Date of publication of application:
**02.03.2016 Bulletin 2016/09**

(73) Proprietors:
- **NISSAN MOTOR CO., LTD.**
  **Yokohama-shi, Kanagawa 220-8623 (JP)**
- **Toyo Tanso Co., Ltd.**
  **Osaka-shi**
  **Osaka 555-0011 (JP)**

(72) Inventors:
- **MASHIO, Tetsuya**
  **Atsugi-shi**
  **Kanagawa 243-0123 (JP)**
- **FURUYA, Yoshihisa**
  **Atsugi-shi**
  **Kanagawa 243-0123 (JP)**
- **AKIZUKI, Ken**
  **Atsugi-shi**
  **Kanagawa 243-0123 (JP)**
- **OHMA, Atsushi**
  **Atsugi-shi**
  **Kanagawa 243-0123 (JP)**
- **MORISHITA, Takahiro**
  **Osaka-shi**
  **Osaka 555-0011 (JP)**
- **SHODAI, Yoshio**
  **Osaka-shi**
  **Osaka 555-0011 (JP)**

(74) Representative: **Grünecker Patent- und Rechtsanwälte PartG mbB Leopoldstraße 4 80802 München (DE)**

(56) References cited:
| | |
|---|---|
| WO-A1-2008/093731 | JP-A- 2000 003 712 |
| JP-A- 2003 142 112 | JP-A- 2006 228 502 |
| JP-A- 2006 321 712 | JP-A- 2010 167 379 |
| JP-A- 2013 109 856 | US-A1- 2003 153 636 |
| US-A1- 2009 239 115 | |

- David Thompsett: "Catalysts for the Proton Exchange Membrane Fuel Cell", Fuel Cell Technology Handbook, 1 January 2003 (2003-01-01), pages 1-23, XP055170946, DOI: 10.1201/9781420041552.ch6 ISBN: 978-0-84-930877-2 Retrieved from the Internet: URL:http://www.crcnetbase.com/doi/pdfplus/10.1201/9781420041552.ch6 [retrieved on 2015-02-19]

## Description

### Technical Field

The present invention relates to a catalyst layer for a fuel cell and a membrane electrode assembly comprising the same.

### Background Art

A polymer electrolyte fuel cell using a proton conductive solid polymer membrane operates at a low temperature in comparison to other types of fuel cells, for example, a solid oxide fuel cell or a molten carbonate fuel cell. For this reason, the polymer electrolyte fuel cell has been expected to be used as a power source for energy storage system or a driving power source for a vehicle such as a car, and practical uses thereof have been started.

In general, such a polymer electrolyte fuel cell uses expensive noble metal catalyst represented by Pt (platinum) or a Pt alloy, which leads to high cost of the fuel cell. Therefore, development of techniques capable of lowering the cost of the fuel cell by reducing a used amount of noble metal catalyst has been required.

For example, Patent Literature 1 discloses the invention relating to a catalyst for an air electrode of a solid polymer electrolyte fuel cell where catalyst particles (alloy particles) obtained by alloy formation of platinum and one supplementary metal are supported on a carbon powder support. In this case, the catalyst has features in that the supplementary metal is iron or cobalt and a compounding ratio of the platinum and the supplementary metal is in a range of 6 : 1 to 3 : 2 (molar ratio) . According to the catalyst disclosed in Patent Literature 1, iron or cobalt is selected as the supplementary metal, and the platinum and the supplementary metal are compounded with a predetermined compounding ratio, and a catalyst activity is improved and a deterioration in characteristics caused by infiltration of the supplementary metal into a polymer membrane can be prevented.

The catalyst disclosed in Patent Literature 1 has a configuration where particles of a platinum/iron alloy or a platinum/cobalt alloy are supported on the surface of fine carbon powder. In this case, since the catalyst has a high catalyst activity, an appropriate catalyst activity is exhibited in a three-phase interface of a fuel cell. As a result, an amount of expensive platinum used in the catalyst can be reduced, which contributes to lowering the cost.

In addition, the catalyst disclosed in Patent Literature 1 is manufactured by immersing a fine carbon powder into a platinum solution, performing reduction, then, immersing the resulting product into an iron solution or a cobalt solution, and after that, performing drying in 100% of hydrogen gas in Example. Patent Literature 2 discloses a catalyst comprising heteroatom-containing mesoporous carbon on which catalytically active particles are supported. Patent Literature 3 describes a mesoporous polymer for use in catalyst supports and sorbents. Non-Patent Literature 1 provides an overview of catalysts for proton exchange membrane fuel cells.

Citation List

### Patent Literature & Non-Patent Literature

Patent Literature 1: Japanese Patent Application Laid-Open No. 2003-142112
Patent Literature 2: US 2009/239115 A1
Patent Literature 3: US 2003/153636 A1

Non-Patent Literature 1: D. Thompsett, Fuel Cell Technology Handbook, CRC Press 2003, Chapter 6 - Catalysts for the Proton Exchange Membrane Fuel Cell.

### Summary of Invention

However, in the catalyst disclosed in Patent Literature 1, there are problems in that it is difficult to obtain the catalyst where the alloy particles with a desired composition are supported inside the support, and the catalyst activity is not sufficient.

The present invention is to provide a cathode catalyst layer where alloy particles with a desired composition are supported inside a support.

The present inventors had studied hard. As a result, they found out that the problems were able to be solved by controlling a size of the pores in which the catalyst metals were supported, so that the present invention was completed.

**Brief Description of Drawings**

Fig. 1 is a schematic cross-sectional diagram illustrating a basic configuration of a solid polymer electrolyte fuel cell.
Fig. 2 is a schematic cross-sectional explanation diagram illustrating a shape and a structure of a catalyst present in an embodiment of the present invention.
Fig. 3 is a schematic diagram illustrating a relationship between a catalyst and an electrolyte in a catalyst layer according to an embodiment of the present invention.

**Description of Embodiments**

According to the present invention, by controlling a size of pores in which catalyst metals are supported, metals constituting alloy particles appropriately enter into a support, so that the alloy particles with a desired composition can be supported inside the support. Therefore, a catalyst having a high catalyst activity can be obtained.

A cathode catalyst layer according to the present invention is configured to include a support and alloy particles supported on the support. In this case, the catalyst (in this specification, sometimes referred to as an "electrode catalyst") satisfies the following configurations (a) to (d):

(a) the alloy particle is an alloy of platinum and cobalt;
(b) the catalyst contains mesopores having a radius of 1 to 10 nm originated from the support;
(c) a mode radius of the mesopores is in a range of 5 to 10 nm;
(d) the alloy particles have a catalyst function, and at least a portion of the alloy particles is supported inside the mesopores,; and
(e) a compounding ratio of the platinum and the cobalt is in a range of 4 : 1 to 1 : 1.

Herein, the "mesopore" denotes a pore of which radius is within a range of 1 to 10 nm among the pores contained in the catalyst. In addition, the catalyst may also has the pores that are not classified as the mesopores, that is, the pores having a radius of less than 1 nm, and the pores having a radius of more than 10 nm.

The present inventors recognize that, in the case where the alloy particles are supported on the surface of the support like the related art as described above-in Patent Literature 1, the alloy particles are abraded or dislocated. On the other hand, the inventors recognize that, when the alloy particles are intended to be supported inside the support, it is difficult to support the alloy particles with a desired composition inside the support.

On the contrary, the present inventors recognize that, by using alloy particles satisfying the configuration (a) and controlling so that the catalyst satisfies the configurations (b) and (c), the alloy particles with a desired composition are supported inside the mesopores (namely, the configuration (d) is satisfied) . Therefore, the catalyst where the alloy particles with a desired composition are supported inside the support can be obtained.

For example, in the case of supporting the platinum on a support and, after that, supporting metals other than the platinum like Patent Literature 1, there is a tendency in that the metals other than the platinum are difficult to enter into the support. In this case, a small amount of metals other than the platinum exists in the alloy formation, and thus, a desired alloy-formation ratio cannot be obtained, so that a desired composition of the alloy particles cannot be obtained. As a result, an excellent catalyst activity cannot be obtained, and a used amount of the platinum is also increased. However, it is recognized that, if the support capable of satisfying the configurations (b) and (c) is used, the cobalt can appropriately enter into the support which supports the platinum. As a result, a desired alloy-formation ratio is achieved, so that the alloy particles with a desired composition can be obtained.

Since the alloy particles satisfying the configuration (a) which is obtained in this manner exhibit an excellent catalytic activity as disclosed in Patent Literature 1, the used amount of platinum can be reduced.

In addition, according to the study of the present inventors, it is recognized that, if the configuration (d) is satisfied, the alloy particles exhibit an excellent catalytic activity in comparison with the case where the alloy particles are supported on the surface of the support. Specifically, in the case where the alloy particles are supported on the surface of the support, an electrolyte (electrolyte polymer) is easily adsorbed to the surfaces of the alloy particles in comparison with a gas such as oxygen. In addition, if the alloy particles are in contact with the electrolyte (electrolyte polymer), a reaction active area of the surface is decreased, so that the catalyst activity is relatively decreased. On the contrary, since the electrolyte cannot enter into the mesopores, the decrease in reaction active area due to the adsorption of the electrolyte can be prevented by supporting the alloy particles inside the support. In addition, as for a three-phase interface, water existing inside the fuel cell or being likely to be generated from the fuel cell plays the role, so that the alloy particles existing inside the support can be effectively used.

Heretofore, the cathode catalyst layer according to the present invention can support the alloy particles with a desired composition inside the support. By doing so, (1) it is possible to prevent the alloy particles from being abraded or dislocated, (2) it is possible to improve a reaction activity of the alloy particles, and (3) it is possible to reduce a used amount of the platinum. As a result, the cathode catalyst layer according to the present invention can realize lowering the cost of a fuel cell. In addition, the cathode catalyst layer has an excellent durability.

Hereinafter, embodiments of the present invention will be described with reference to the drawings.

[Fuel Cell]

A fuel cell comprises a membrane electrode assembly (MEA) and a pair of separators including an anode-side separator having a fuel gas passage through which a fuel gas flows and a cathode-side separator having an oxidant gas passage through which an oxidant gas flows. The fuel cell comprising a cathode catalyst layer according to the present invention has excellent durability and can exhibit a high power generation performance.

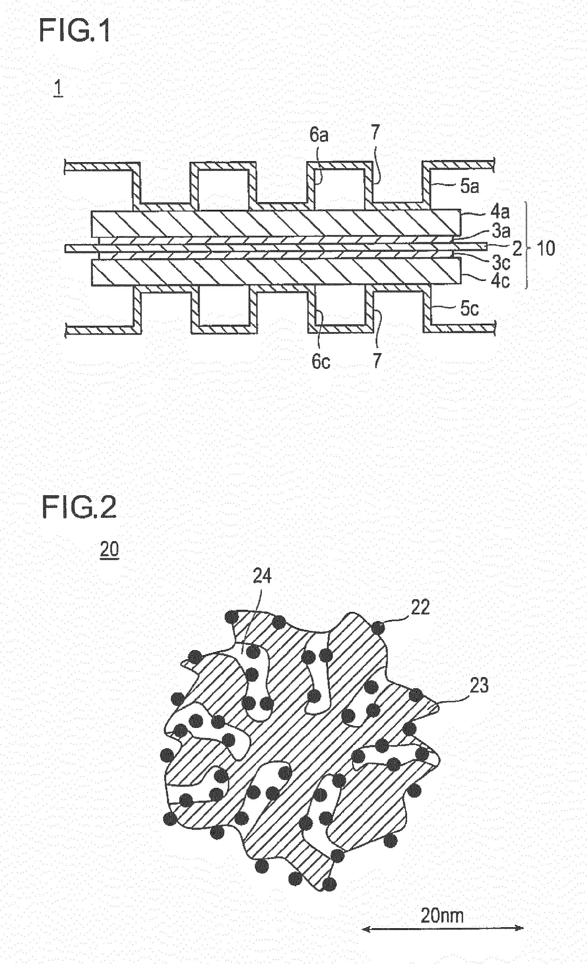

Fig. 1 is a schematic diagram illustrating a basic configuration of a polymer electrolyte fuel cell (PEFC) 1. First, a PEFC 1 is configured to include a solid polymer electrolyte membrane 2 and a pair of catalyst layers (anode catalyst layer 3a and cathode catalyst layer 3c) interposing the solid polymer electrolyte membrane 2. A stacked body of the solid polymer electrolyte membrane 2 and the catalyst layers (3a, 3c) is sandwiched by a pair of gas diffusion layers (GDLs) (anode gas diffusion layer 4a and cathode gas diffusion layer 4c). In this manner, the solid polymer electrolyte membrane 2, a pair of the catalyst layers (3a, 3c), and a pair of gas diffusion layers (4a, 4c) in the stacked state constitute a membrane electrode assembly (MEA) 10.

In the PEFC 1, the MEA 10 is sandwiched by a pair of separators (anode separator 5a and cathode separator 5c). In Fig. 1, the separators (5a, 5c) are illustrated to be positioned at two ends of the MEA 10 illustrated. In general, in a fuel cell stack where a plurality of MEAs are stacked, the separator is also used as a separator for adjacent PEFC (not shown). In other words, MEAs in a fuel cell stack are sequentially stacked through the separator to constitute the stack. In an actual fuel cell stack, a gas sealing member is disposed between the separators (5a, 5c) and the solid polymer electrolyte membrane 2 and between the PEFC 1 and a different PEFC adjacent thereto. However, it is omitted in Fig. 1.

The separators (5a, 5c) are obtained by applying a pressing process to a thin board having a thickness of, for example, 0.5 mm or less to form a corrugating shape illustrated in Fig. 1. Convex portions of the separators 5a and 5c seen from the MEA side are in contact with the MEA 10. This secures an electrical connection with the MEA 10. Concave portions (spaces between the separator and the MEA formed by the corrugating shapes of the separators) of the separators (5a and 5c) seen from the MEA side function as a gas passage for passing a gas during the operation of the PEFC 1. Specifically, a fuel gas (for example, hydrogen) flows through a gas passage 6a of the anode separator 5a, and an oxidant gas (for example, air) flows through a gas passage 6c of the cathode separator 5c.

On the other hand, concave portions of the separators (5a, 5c) seen from the side opposite to the MEA side function as a coolant passage 7 for passing a coolant (e.g. water) for cooling the PEFC during the operation of the PEFC 1. In addition, manifolds (not shown) are typically installed in the separators. The manifold functions as a connecting means for connecting cells when the stack is configured. According to the configuration, a mechanical strength of the fuel cell stack can be secured.

In the embodiment illustrated in Fig. 1, each of the separators (5a, 5c) is formed in a corrugating shape. However, the separator is not limited to such a corrugating shape. If it can serve as a gas passage and a coolant passage, arbitrary shape such as a flat shape and a partially corrugating shape may be employed.

The fuel cell including the MEA according to the present invention as described above has excellent performance of power generation. Herein, the type of the fuel cell is not particularly limited. In the above description, the polymer electrolyte fuel cell is exemplified, but besides, an alkali fuel cell, a direct methanol fuel cell, a micro fuel cell, and the like may be exemplified. Among the fuel cells, due to a small size and capability of obtaining high density and high power, a polymer electrolyte fuel cell (PEFC) is preferred. In addition, the fuel cell is useful as a power source for energy storage system besides a power source for a vehicle such as a car where a mounting space is limited. Among the power sources, the fuel cell is particularly preferably used as a power source for a vehicle such as a car where a high output voltage is required after the stopping of operation for a relatively long time.

A fuel used for operating the fuel cell is not particularly limited. For example, hydrogen, methanol, ethanol, 1-propanol, 2-propanol, 1-butanol, secondary butanol, tertiary butanol, dimethyl ether, diethyl ether, ethylene glycol, diethylene glycol, or the like can be used. Among them, in view of capability of high output, hydrogen or methanol is preferably used.

In addition, although application use of the fuel cell is not particularly limited, the fuel cell is preferably applied to vehicles . The electrolyte membrane-electrode assembly according to the present invention has excellent power generation performance and durability, and can be downsized. Therefore, in terms of mountability on a vehicle, the resulting fuel cell is particularly advantageous in the case where the fuel cell is applied to a vehicle.

Hereinafter, members constituting the fuel cell will be described in brief, but the scope of the present invention is not limited only to the following forms.

[Catalyst (Electrode Catalyst)]

Fig. 2 is a schematic cross-sectional diagram illustrating a shape and a structure of a catalyst used in an embodiment of the present invention. As illustrated in Fig. 2, a catalyst 20 according to the embodiment consists of alloy particles 22 and supports 23. In addition, the catalyst 20 has pores (mesopores) 24 having a radius of 1 to 10 nm originated from the supports. In this case, a mode radius of the mesopores is in a range of 5 to 10 nm. In addition, the alloy particles 22 include an alloy containing platinum and cobalt. Herein, the alloy particles 22 are supported inside the mesopores 24. In addition, at least a portion of the alloy particles 22 is supported inside the mesopores 24, and a portion thereof may be supported on the surfaces of the supports 23. However, in terms of preventing the electrolyte and the alloy particles in the catalyst layer from being in contact with each other, it is preferable that substantially all the alloy particles 22 are supported inside the mesopores 24. Herein, the amount of "substantially all the alloy particles" is not particularly limited if the amount can improve a sufficient catalyst activity. The amount of "substantially all the alloy particles" is preferably 50 wt% or more (upper limit: 100 wt%) with respect to all the alloy particles, more preferably 80 wt% or more (upper limit: 100 wt%).

In this specification, "the alloy particles are supported inside the mesopores" can be recognized by a decrease in pore volume of the mesopores before and after the supporting of the alloy particles on the support. Specifically, a support has mesopores at a certain pore volume, and if the alloy particles are supported inside the mesopores, the pore volume of the mesopores is decreased. Therefore, the case where a difference [= (pore volume of the mesopores before supporting) - (pore volume of the mesopores after supporting)] between the pore volume of the mesopores of the support before the supporting of the alloy particles and the pore volume of the mesopores of the support after the supporting of the alloy particles exceeds 0 corresponds to "the alloy particles are supported inside the mesopores". In terms of the reduction in the gas transport resistance and the securing of the path for gas transportation, the decreased value of the pore volume of the mesopores before and after the supporting of the alloy particles is preferably 0.02 cc/g or more, more preferably in a range of 0.02 to 0.21 cc/g.

In an embodiment of the present invention, the radius of the mesopores originated from the support of the catalyst (after the supporting of the alloy particles) is in a range of 1 to 10 nm, preferably in a range of 2.5 to 10 nm, more preferably in a range of 5 to 10 nm. By controlling so that the mesopores has the radius as described above, the alloy particles or the metals constituting the alloy particles appropriately enter into the support during the manufacturing, and the alloy particles with a desired composition can be obtained.

In addition, the maximum frequent diameter (in the present invention, simply referred to as a "mode radius of the mesopores") of the pore distribution of the mesopores originated from the supports of the catalyst (after the supporting of the alloy particles) is in a range of 5 to 10 nm. If the mode radius of the mesopores is controlled so as to be within such a range, a sufficient number of the alloy particles can be stored (supported), and thus the electrolyte and the alloy particles in the catalyst layer are physically separated from each other (contact of the alloy particles and the electrolyte can be more effectively suppressed and prevented). Therefore, the activity of the alloy particles can be more effectively used. In addition, due to existence of a large volume of the mesopores, the function and effect of the present invention are further remarkably exhibited, so that a catalyst reaction can be more effectively facilitated.

A pore volume of the mesopores of the support of the catalyst (after the supporting of the alloy particles) (in the present invention, simply referred to as a "pore volume of the mesopores") is not particularly limited, but it is preferably 0.6 cc/g support or more, more preferably in a range of 0.6 to 3 cc/g support, even more preferably in a range of 0.6 to 1.5 cc/g support. If the pore volume is 0.6 cc/g support or more, a large number of the alloy particles can be stored in (supported by) the mesopores, and thus, the electrolyte and the alloy particles in the catalyst layer are physically separated from each other (contact of the alloy particles and the electrolyte can be more effectively suppressed and prevented). Therefore, the activity of the alloy particles can be more effectively used. In addition, due to existence of a large number of the mesopores, the function and effect of the present invention are further remarkably exhibited, so that a catalyst reaction can be more effectively facilitated.

The BET specific surface area (BET specific surface area ($m^2$/g support) of the catalyst per 1 g of support) of the catalyst (after supporting of the alloy particles) is not particularly limited, but it is preferably 1000 $m^2$/g support or more, more preferably in a range of 1000 to 3000 $m^2$/g support, even more preferably in a range of 1100 to 1800 $m^2$/g support. If the specific surface area is within such a range, a large number of the alloy particles can be stored in (supported by) the mesopores. In addition, the electrolyte and the alloy particles in the catalyst layer are physically separated from each other (contact of the alloy particles and the electrolyte can be more effectively suppressed and prevented). Therefore, the activity of the alloy particles can be more effectively used. In addition, due to existence of a large number of the mesopores or a large number of other pores, the function and effect of the present invention are further remarkably exhibited, so that a catalyst reaction can be more effectively facilitated.

In addition, in this specification, the "BET specific surface area ($m^2$/g support)" of the catalyst is measured by a nitrogen adsorption method. More specifically, about 0.04 to 0.07 g of the catalyst powder is accurately weighed and enclosed in a sample tube. The sample tube is preliminarily dried by a vacuum drier at 90°C for several hours, and a sample for measurement is obtained. For the weighing, an electronic balance (AW220) produced by Shimadzu Co., Ltd. is used. In addition, in case of a coated sheet, about 0.03 to 0.04 g of a net weight of a coat layer obtained by subtracting a weight of Teflon (registered trademark) (substrate) having the same area from a total weight of the coated sheet is used as the sample weight. Next, in the following measurement condition, the BET specific surface area is measured. In an adsorption side of adsorption and desorption isotherms, a BET plot is produced from a relative pressure (P/P0) range of about 0.00 to 0.45, and the surface area and the BET specific surface area are calculated from the slope and the intercept.

[Chem. 1] < Measurement Condition > Measurement Apparatus : BELSOROP 36, High - Precession Automatic Gas Adsorption Apparatus produced by BEL Japan, Inc. Adsorption Gas : N2 Dead Volume Measurement Gas : He Adsorption Temperature : 77 K (Liquid Nitrogen Temperature) Measurement Preparation : 90 °C, Several hours in Vacuum Drier (After He Purging, Setting on Measurement Stage) Measurement Mode : Adsorption Process and Desorption Process in Isotherm Measurement Relative Pressure P/Po : about 0 to 0.99 Equilibrium Setting Time : 180 sec for 1 relative pressure

The "pore radius (nm) of the mesopores" denotes a radius of the pores measured by a nitrogen adsorption method (DH method). In addition, the "mode radius (nm) of the pore distribution of the mesopores" denotes a pore radius taking a peak value (maximum frequency) in a differential pore distribution curve obtained by the nitrogen adsorption method (DH method).

The "pore volume of the mesopores" denotes a total volume of the mesopores having a radius of 1 to 10 nm of the support existing in the catalyst and is expressed by volume (cc/g support) per 1 g of support. The "pore volume of the mesopores (cc/g support)" is calculated as an area (integration value) under a differential pore distribution curve obtained according to a nitrogen adsorption method (DH method).

The "differential pore distribution" is a distribution curve where a pore diameter is plotted in the horizontal axis and a pore volume corresponding to the pore diameter in the catalyst is plotted in the vertical axis. Namely, when the pore volume of the catalyst obtained by the nitrogen adsorption method (DH method) is denoted by V and the pore diameter is denoted by D, a value (dV/d(logD)) is obtained by dividing the differential pore volume dV by a differential logarithm of the pore diameter. Next, the differential pore distribution curve is obtained by plotting the dV/d(logD) for the average pore diameter of each section. The differential pore volume dV denotes an increment of pore volume between measurement points.

In this specification, the measurement methods of the radius and pore volume of the mesopores in accordance with the nitrogen adsorption method (DH method) are not particularly limited. For example, methods disclosed in well-known literatures such as "Science of Adsorption" (second edition written by Kondo Seiichi, Ishikawa Tatsuo, and Abe Ikuo, Maruzen Co., Ltd.), "Fuel Cell Analysis Method" (compiled by Takasu Yoshio, Yoshitake Yu, and Ishihara Tatsumi of KAGAKU DOJIN), and an article by D. Dollion and G. R. Heal in J. Appl. Chem. 14, 109 (1964) may be employed. In this specification, the radius and pore volume of the mesopores in accordance with the nitrogen adsorption method (DH method) are values measured according to the method disclosed in the article written by D. Dollion and G. R. Heal in J. Appl. Chem. 14, 109 (1964).

The method of manufacturing the catalyst having a specific pore distribution described above is not particularly limited, but in general it is important to set the pore distribution of the mesopores of the support to the above-described pore distribution (that is, the same pore distribution as that of the catalyst) . Specifically, as the method of manufacturing the support having the mesopores having a radius of 1 to 10 nm wherein the mode radius of the mesopores is in a range of 2.5 to 10 nm, the method disclosed in Japanese Patent Application Publication No. 2010-208887 (US Patent Application Publication No. 2011/0318254) or the like is preferably used. In addition, as the method of manufacturing the support where the pore volume of the mesopores is controlled to be 0.6 cc/g support or more, the method disclosed in Japanese Patent Application Publication No. 2010-208887 (US Patent Application Publication No. 2011/0318254) or the like is preferably used.

A material of the support is not particularly limited if pores (primary pores) having mesopores of a radius of 1 to 10 nm and a mode radius of the mesopores in a range of 5 to 10 nm can be formed inside the support and if the support has enough specific surface area and enough electron conductivity to support a catalyst component inside the mesopores in a dispersed state. Preferably, a main component is carbon. Specifically, carbon particles made of carbon black (Ketjen Black, oil furnace black, channel black, lamp black, thermal black, acetylene black, or the like), activated charcoal, or the like may be exemplified. The expression "main component is carbon" denotes that the support contains carbon atoms as a main component, and includes both of the configurations that the support consists only of carbon atoms and that the support substantially consists of carbon atoms. An element (s) other than carbon atom may be contained. The expression "substantially consists of carbon atoms" denotes that impurities of about 2 to 3 wt% or less can be contaminated.

More preferably, since it is easy to form a desired pore space inside the support, carbon black is used, and more preferably, carbon manufactured according to the method disclosed in Japanese Patent Application Publication No. 2010-208887 (US Patent Application Publication No. 2011/0318254) or the like is used. For example, the radius or mode radius of the mesopores of the support and the pore volume of the mesopores can be controlled by changing a diameter of template particles such as magnesium oxide used for manufacturing the support or a type of resin.

Besides the aforementioned carbon materials, a porous metal such as Sn (tin) or Ti (titanium) or a conductive metal oxide can also be used as the support.

The BET specific surface area of the support may be a specific surface area enough to highly dispersedly support the catalyst component. The BET specific surface area of the support is substantially equivalent to the BET specific surface area of the catalyst. The BET specific surface area of the support is preferably in a range of 1000 to 3000 $m^2/g$, more preferably in a range of 1100 to 1800 $m^2/g$. If the specific surface area is within such a range, a sufficient number of the mesopores can be secured, and thus, a large number of the alloy particles can be stored in (supported by) the mesopores. In addition, the electrolyte and the alloy particles in the catalyst layer are physically separated from each other (contact of the alloy particles and the electrolyte can be more effectively suppressed and prevented). Therefore, the activity of the alloy particles can be more effectively used. In addition, the balance between dispersibility of the catalyst component and an effective utilization rate of the catalyst component on the catalyst support can be appropriately controlled.

An average particle diameter of the support is preferably in a range of 20 to 100 nm. If the average primary particle diameter is within such a range, even in the case where the above-described pore structure is formed in the support, mechanical strength can be maintained, and a catalyst layer can be controlled within an appropriate range. As a value of the "average particle diameter of a support", unless otherwise noted, a value calculated as an average value of particle diameters of particles observed within several or several tens of fields by using observation means such as a scanning electron microscope (SEM) or a transmission electron microscope (TEM) is employed. In addition, the "particle diameter" denotes a maximum distance among distances between arbitrary two points on an outline of a particle.

In the present invention, there is no need to use the above-described granular porous support, so long as the support has the above-described pore distributions of mesopores in the catalyst.

Namely, as the support, a non-porous conductive support, nonwoven fabric, carbon paper, carbon cloth, or the like made of carbon fiber constituting a gas diffusion layer, or the like may be exemplified. In this case, the catalyst can be supported on the non-porous conductive support or can be directly attached to the nonwoven fabric, the carbon paper, the carbon cloth, or the like made of the carbon fiber constituting the gas diffusion layer of the membrane electrode assembly.

An alloy particle which can be used in the present invention performs catalysis of electrochemical reaction. As an alloy particle used for an anode catalyst layer, a well-known catalyst can be used in a similar manner without particular limitation if the catalyst has catalytic effects on oxidation reaction of hydrogen. In addition, as an alloy particle used for a cathode catalyst layer, a platinum-cobalt catalyst is used. In general, an alloy is obtained by mixing a metal element with at least one metal element or non-metal element, and is a general term for substances having metallic properties. The structure of the alloy includes an eutectic alloy which is a mixture where component elements form separate crystals, an alloy where component elements are completely fused to form a solid solution, an alloy where component elements form a intermetallic compound or a compound between a metal and a non-metal, and the like, and any one thereof may be employed in the present application.

The alloy particle which can be used in the present invention is an alloy including platinum and cobalt.

As disclosed in Patent Literature 1, such alloy particles can exhibit a high activity. The composition of the alloy is in a range of 4 : 1 to 1 : 1 (molar ratio), more preferably in a range of 3 : 1 to 1 : 1 (molar ratio). If the compounding ratio is within such a range, a high catalytic activity can be exhibited while reducing the platinum content, so that it is possible to lower the cost of a fuel cell.

Together with the alloy particles, a different catalyst of alloy particles such as platinum, ruthenium, iridium, rhodium, palladium, osmium, tungsten, lead, iron, copper, silver, chromium, cobalt, nickel, manganese, vanadium, molybdenum, gallium, or aluminum and an alloy thereof (excluding the aforementioned alloy particles) can be simultaneously used.

The shape and size of the alloy particles or the different catalyst (catalyst component) are not particularly limited, but the shapes and sizes of well-known catalyst components may be employed. As the shape, for example, a granular shape, a squamous shape, a laminar shape, or the like may be used, but the granular shape is preferred.

The average particle diameter of the alloy particles is not particularly limited, but it is preferably 3 nm or more, more preferably more than 3 nm and 30 nm or less, even more preferably more than 3 nm and 10 nm or less. If the average particle diameter of the alloy particles is 3 nm or more, the alloy particles are relatively strongly supported inside the mesopores, so that contact with the electrolyte in the catalyst layer is more effectively suppressed and prevented. In addition, elution according to a change in voltage can be prevented, and degradation in performance over time can be also suppressed. Therefore, the catalyst activity can be further improved, and namely, the catalyst reaction can be more efficiently facilitated. On the other hand, if the average particle diameter of the alloy particles is 30 nm or less, the alloy particles can be supported inside the mesopores of the supports by a simple method, so that a covering ratio of the electrolyte on the alloy particles can be reduced. In addition, in the present invention, the "average particle diameter of the alloy particles" can be measured as an average value of a crystallite diameter obtained from a half-value width of a diffraction peak of the alloy particle component in the X-ray diffraction spectroscopy or as an average value of a particle diameter of the alloy particles examined from a transmission electron microscope (TEM) image.

In this embodiment, the catalyst content (mg/cm$^2$) per unit catalyst-coated area is not particularly limited if a sufficient degree of dispersion of the catalyst on the support and a power generation performance are obtained. For example, the catalyst content is in a range of 0.01 to 1 mg/cm. In addition, the platinum content per unit catalyst-coated area is preferably 0.5 mg/cm$^2$ or less. The usage of expensive noble-metal catalyst represented by platinum constituting the alloy particles results in a high price of the fuel cell. Therefore, it is preferable that the cost be reduced by decreasing the used amount (platinum content) of the expensive platinum down to the above-described range. The lower limit value is not particularly limited if the power generation performance is obtained, and for example, the lower limit value is 0.01 mg/cm$^2$ or more. The content of the platinum is more preferably in a range of 0.02 to 0.4 mg/cm$^2$. In this embodiment, since the alloy particles having a high activity can be used and an activity per catalyst weight can be improved by controlling the pore structure of the support, the used amount of the expensive catalyst can be reduced.

In addition, in this specification, an inductively coupled plasma emission spectroscopy (ICP) is used for measurement (determination) of a "content (mg/cm$^2$) of catalyst (platinum) per unit catalyst-coated area" . A method of obtaining a desired "content (mg/cm$^2$) of catalyst (platinum) per unit catalyst-coated area" is also easily performed by the skilled in the art, and the amount can be adjusted by controlling slurry composition (catalyst concentration) and the coated amount.

In addition, the supported amount (in some cases, referred to as a support ratio) of the alloy particles on the support is preferably 40 wt% or less with respect to a total amount of the supported catalyst body (that is, the support and the alloy particles), more preferably in a range of 20 to 30 wt%. In the art, if the supported concentration of the alloy particles is decreased, there is a tendency for the alloy formation to be difficult to proceed. However, in the catalyst according to the embodiment, even in the case where the supported amount of the alloy particles is such a small as 40 wt% or less, the alloy formation can be appropriately promoted. Therefore, it is possible to provide a catalyst having a small supported amount.

[Catalyst Layer]

The catalyst described above can be appropriately used for an electrode catalyst layer for fuel cell. Namely, the present invention also provides cathode catalyst layer for fuel cell including the catalyst and an electrolyte.

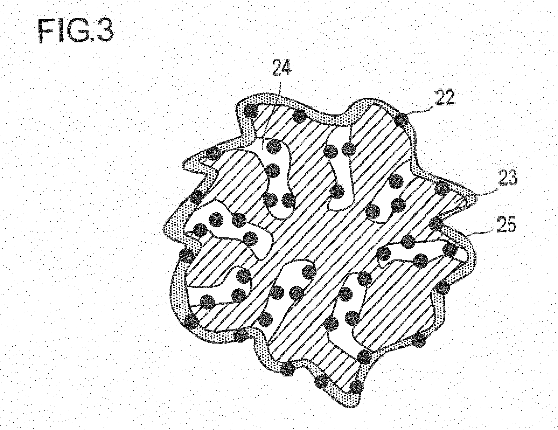

Fig. 3 is a schematic diagram illustrating a relationship between a catalyst and an electrolyte in a cathode catalyst layer according to an embodiment of the present invention. As illustrated in Fig. 3, in the cathode catalyst layer according to the present invention, the catalyst is covered with the electrolyte 25, but the electrolyte 25 does not enter into the mesopores 24 of the catalyst (support 23). Therefore, although the alloy particles 22 on the surfaces of the supports 23 are in contact with the electrolyte 25, the alloy particles 22 supported in the mesopores 24 are not in contact with the electrolyte 25. The alloy particles in the mesopores form a three-phase interface with respect to an oxygen gas and water in the state that the alloy particles are not in contact with the electrolyte, so that a reaction active area of the alloy particles can be secured.

According to the present invention, the catalyst described above is used in a cathode catalyst layer. As described above, although the catalyst is not in contact with the electrolyte, the catalyst can be effectively used by forming three-phase interface of the catalyst and water. This is because water is formed in the cathode catalyst layer.

An electrolyte is not particularly limited, but it is preferably an ion-conductive polymer electrolyte. Since the polymer electrolyte serves to transfer protons generated in the vicinity of the catalyst active material on a fuel electrode side, the polymer electrolyte is also referred to as a proton conductive polymer.

The polymer electrolyte is not particularly limited, but well-known knowledge in the art can be appropriately referred to. The polymer electrolytes are mainly classified into fluorine-based polymer electrolytes and hydrocarbon-based polymer electrolytes depending on a type of an ion-exchange resin as a constituent material.

As an ion-exchange resin constituting the fluorine-based polymer electrolyte, for example, perfluorocarbon sulfonic acid based polymers such as Nafion (registered trademark, produced by DuPont), Aciplex (registered trademark, produced by Asahi Kasei Co., Ltd.), and Flemion (registered trademark, produced by Asahi Glass Co., Ltd.), perfluorocarbon phosphoric acid based polymers, trifluorostyrene sulfonic acid based polymers, ethylene tetrafluoroethylene-g-styrene sulfonic acid based polymers, ethylene-tetrafluoroethylene copolymers, polyvinylidene fluoride-perfluorocarbon sulfonic acid based polymers, and the like may be exemplified. In terms excellent heat resistance, chemical stability, durability, and mechanical strength, the fluorine-based polymer electrolyte is preferably used, and a fluorine-based polymer electrolyte formed of a perfluorocarbon sulfonic acid based polymer is particularly preferably used.

As a hydrocarbon-based electrolyte, sulfonated polyether sulfones (S-PES), sulfonated polyaryl ether ketones, sulfonated polybenzimidazole alkyls, phosphonated polybenzimidazole alkyls, asulfonated polystyrenes, sulfonated polyether ether ketones (S-PEEK), sulfonated polyphenylenes (S-PPP), and the like may be exemplified. In terms of manufacturing advantages such as inexpensive raw materials, simple manufacturing processes, and high selectivity of materials, a hydrocarbon-based polymer electrolyte is preferably used.

These ion-exchange resins may be singly used, or two or more resins may be used together. In addition, the material is not limited to the above-described material, but another material may be used.

With respect to the polymer electrolyte which serves to transfer protons, proton conductivity is important. In the case where EW of a polymer electrolyte is too large, ion conductivity with in the entire catalyst layer would be decreased. Therefore, the catalyst layer according to the embodiment preferably includes a polymer electrolyte having a small EW. Specifically, catalyst layer according to the embodiment preferably includes a polymer electrolyte having an EW of 1500 g/eq. or less, more preferably includes a polymer electrolyte having an EW of 1200 g/eq. or less, and particularly preferably includes a polymer electrolyte having an EW of 1000 g/eq. or less.

On the other hand, in the case where the EW is too small, since hydrophilicity is too high, water is hard to smoothly move. Due to such a point of view, the EW of polymer electrolyte is preferably 600 or more. The EW (Equivalent Weight) represents an equivalent weight of an exchange group having proton conductivity. The equivalent weight is a dry weight of an ion exchange membrane per 1 eq. of ion exchange group, and is represented in units of "g/eq.".

It is preferable that the catalyst layer includes two types or more of polymer electrolytes having different EWs in a power generation surface, and in this case, among the polymer electrolytes, the polymer electrolyte having the lowest EW is used in an area where relative humidity of a gas in a passage is 90% or less. By employing such material arrangement, resistance is decreased irrespective of a current density area, so that cell performance can be improved. The EW of polymer electrolyte used in the area where relative humidity of the gas in a passage is 90% or less, that is, EW of polymer electrolyte having the lowest EW is preferably 900 g/eq. or less. By this, the above-described effects can be further more certainly and more remarkably attained.

The polymer electrolyte having the lowest EW is preferably used in an area of which temperature is higher than an average temperature of inlet and outlet for cooling water. By this, resistance is decreased irrespective of a current density area, so that cell performance can be further improved.

In terms decreased resistance value of a fuel cell system, the polymer electrolyte having the lowest EW is preferably provided in an area within the range of 3/5 or less of the passage length from a gas supply inlet of at least one of a fuel gas and an oxidant gas.

The cathode catalyst layer according to the embodiment may include, between the catalyst and the polymer electrolyte, a liquid proton conducting material capable of connecting the catalyst and the polymer electrolyte in a proton conductible state. By introducing the liquid proton conducting material, a proton transport path through the liquid proton conducting material is provided between the catalyst and the polymer electrolyte, so that protons necessary for the power generation can be efficiently transported on the surface of the catalyst. By this, availability of the catalyst is improved, and thus an amount of used catalyst can be reduced while maintaining power generation performance. The liquid proton conducting material may be interposed between the catalyst and the polymer electrolyte. The liquid proton conducting material may be disposed in pores (secondary pores) between porous supports in a catalyst layer or may be disposed in pores (mesopores and the like: primary pores) in porous supports.

The liquid proton conducting material is not particularly limited if the material has ion conductivity and has a function of forming a proton transport path between the catalyst and the polymer electrolyte. Specifically, water, a protic ionic liquid, an aqueous solution of perchloric acid, an aqueous solution of nitric acid, an aqueous solution of formic acid, an aqueous solution of acetic acid, and the like may be exemplified.

In the case of using water as the liquid proton conducting material, the water can be introduced as the liquid proton conducting material into the catalyst layer by wetting the catalyst layer with a small amount of liquid water or a humidified gas before the start of power generation. In addition, water generated through electrochemical reaction during the operation of a fuel cell may be used as the liquid proton conducting material. Therefore, in a state where a fuel cell starts to be operated, the liquid proton conducting material is not necessarily retained. For example, a surface distance between the catalyst and the electrolyte is preferably set to be a diameter of an oxygen ion constituting a water molecule, that is, 0.28 nm or more. By maintaining such a distance, water (liquid proton conducting material) can be interposed between the catalyst and the polymer electrolyte (in the liquid conducting material retaining portion) while maintaining the non-contact state between the catalyst and the polymer electrolyte, so that a proton transport path can be secured by water therebetween.

In the case of using a material such as an ionic liquid other than water as the liquid proton conducting material, the ionic liquid, the polymer electrolyte, and the catalyst are preferably allowed to be dispersed in a solution in the preparation of a catalyst ink. However, the ionic liquid may be added at the time of coating a catalyst layer substrate with a catalyst.

In the catalyst used in the present invention, a total area of the catalyst which is in contact with the polymer electrolyte is set to be smaller than a total area of the catalyst exposed to the liquid conducting material retaining portion.

Comparison of these areas can be performed, for example, by obtaining a magnitude relationship between capacitance of an electrical double layer formed in a catalyst-polymer electrolyte interface and capacitance of an electrical double layer formed in a catalyst-liquid proton conducting material interface in a state where the liquid conducting material retaining portion is filled with the liquid proton conducting material. Namely, since capacitance of an electrical double layer is proportional to an area of an electrochemically effective interface, if the capacitance of the electrical double layer formed in the catalyst-electrolyte interface is smaller than the capacitance of the electrical double layer formed in the catalyst-liquid proton conducting material interface, a contact area of the catalyst with the electrolyte is smaller than an area thereof exposed to the liquid conducting material retaining portion.

Herein, a measuring method for capacitance of an electrical double layer formed in a catalyst-electrolyte interface and capacitance of an electrical double layer formed in a catalyst-liquid proton conducting material interface, that is, a magnitude relationship between a contact area of the catalyst with the electrolyte and a contact area of the catalyst and the liquid proton conducting material (determination method for a magnitude relationship between a contact area of the catalyst and the electrolyte and an area of the catalyst exposed to the liquid conducting material retaining portion) will be described.

Namely, in the cathode catalyst layer according to the embodiment, the following four types of interfaces can contribute as capacitance of electrical double layer (Cdl):

    (1) catalyst-polymer electrolyte (C-S)
    (2) catalyst-liquid proton conducting material (C-L)
    (3) porous support-polymer electrolyte (Cr-S)
    (4) porous support-liquid proton conducting material (Cr-L)

As described above, since capacitance of an electrical double layer is proportional to an area of an electrochemically effective interface, $Cdl_{C-S}$ (capacitance of an electrical double layer in a catalyst-polymer electrolyte interface) and $Cdl_{C-L}$ (capacitance of an electrical double layer in a catalyst-liquid proton conducting material interface) may be obtained. Therefore, the contribution of the four types of interfaces to capacitance of an electrical double layer (Cdl) can be identified as follows.

First, for example, under a high humidity condition such as 100% RH and under a lower humidity condition such as 10% RH or less, each capacitance of electrical double layers is measured. As a measurement method for the capacitance of electrical double layer, cyclic voltammetry, electrochemical impedance spectroscopy, or the like may be exemplified. From the comparison, the contribution of the liquid proton conducting material (in this case, "water"), that is, the above-described contributions (2) and (4) can be identified.

In addition, the contributions to capacitance of an electrical double layer can be identified by deactivating a catalyst, for example, in the case of using Pt as the catalyst, by deactivating the catalyst by supplying CO gas to an electrode to be measured to allow CO to be adsorbed on the surface of Pt. In this state, as described above, under the high humidity condition and under the low humidity condition, each capacitance of electrical double layers is measured by the same method, and from the comparison, the contributions of the catalyst, that is, the above-described contributions (1) and (2) can be identified.

By using the above-described method, all the contributions (1) to (4) described above can be identified, the capacitance of the electrical double layer in the interface between the catalyst and the polymer electrolyte and the capacitance of the electrical double layer in the interface between the catalyst and the liquid proton conducting material can be obtained.

Namely, a measurement value (A) in a highly-humidified state can be regarded as capacitance of electrical double layer formed in all the interfaces (1) to (4), and a measurement value (B) in a lowly-humidified state can be regarded as capacitance of the electrical double layer formed in the interfaces (1) and (3). In addition, a measurement value (C) in a catalyst-deactivated and highly-humidified state can be regarded as capacitance of the electrical double layer formed in the interfaces (3) and (4), and a measurement value (D) in a catalyst-deactivated and lowly-humidified state can be regarded as capacitance of the electrical double layer formed in the interface (3).

Therefore, the difference between A and C can be regarded as the capacitance of the electrical double layer formed in the interfaces (1) and (2), and the difference between B and D can be regarded as the capacitance of the electrical double layer formed in the interface (1). Next, by calculating the difference between these values, i.e., (A-C)-(B-D), the capacitance of the electrical double layer formed in the interface (2) can be obtained. In addition, a contact area of the catalyst with the polymer electrolyte or an exposed area thereof to the conducting material retaining portion can be obtained by, for example, TEM (transmission electron microscope) tomography besides the above-described method.

If necessary, the catalyst layer may contain additives of a water repellent such as polytetrafluoroethylene, polyhexafluoropropylene, and tetrafluoroethylene-hexafluoropropylene copolymer, a dispersant such as a surfactant, a thickener such as glycerin, ethylene glycol (EG), polyvinyl alcohol (PVA), and propylene glycol (PG), a pore-forming agent, or the like.

A layer thickness (as a dried thickness) of the catalyst layer is preferably in the range of 0.05 to 30 μm, more preferably in the range of 1 to 20 μm, even more preferably in the range of 2 to 15 μm. These can be applied to both of the cathode catalyst layer and the anode catalyst layer. However, the layer thickness of the cathode catalyst layer and the thickness of the anode catalyst layer may be equal to or different from each other.

(Method of Manufacturing Catalyst Layer)

Hereinafter, a method for manufacturing the cathode catalyst layer will be described. In addition, all the conditions for the components and the materials of the catalyst layer are as described above, and thus, the description thereof is omitted.

First, a support (in this specification, sometimes referred to as a "porous support" or a "conductive porous support") is prepared. Specifically, the support may be manufactured as described above in the method of manufacturing the support. By doing so, pores having a specific pore distribution (pores including mesopores having a radius of 1 to 10 nm and a mode radius of the mesopores being in a range of 5 to 10 nm) can be formed in the support.

Next, the alloy particles are supported on the porous support, so that a catalyst powder is formed. The supporting of the alloy particles on the porous support can be performed by a well-known method. For example, a well-known method such as an impregnation method, a liquid phase reduction supporting method, an evaporation drying method, a colloid adsorption method, a spray pyrolysis method, or reverse micelle (micro-emulsion method) may be used. Among the methods, the impregnation method is preferably used.

In an embodiment, the aforementioned impregnation method includes a process (1) of manufacturing a primary support by immersing the support into a solution containing platinum and reducing the resulting product, a process (2) of manufacturing a secondary support by immersing the primary support into a solution containing cobalt, and a process (3) of forming an alloy of the platinum of the secondary support and the alloy of cobalt.

Process (1)

The process (1) is a process of manufacturing the primary support by immersing the support into the solution containing platinum and reducing the resulting product.

The solution containing platinum includes a platinum-containing compound and a solvent.

The platinum-containing compound is not particularly limited, but platinum powder, platinum chloride (II), platinum chloride (IV), platinum (IV) chloride acid, platinum oxide (IV), diammine dinitro platinum (II), dichloro tetraammine platinum (II), hexahydroxo platinum acid (IV), tetrachloroplatinate (II) potassium, tetrachloroplatinate (IV) potassium, and the like may be exemplified. The platinum-containing compounds may be used alone or may be used in a combination of two or more types.

As the aforementioned solvent, water or the like may be exemplified.

In addition, if necessary, the solution containing platinum may include an acid. As the acid, hydrochloric acid, nitric acid, sulfuric acid, and a mixed acid (for example, aqua regia) thereof may be exemplified.

The concentration of platinum in the solution containing platinum is preferably in a range of 0.1 to 50 mass%, more preferably in a range of 0.5 to 20 mass%.

The reducing agent which can be used is not particularly limited, but hydrogen, hydrazine, sodium hydroborate, sodium thiosulfate, citric acid, sodium citrate, L-ascorbic acid, sodium borohydride, formaldehyde, methanol, ethanol, ethylene, carbon monoxide, or the like may be exemplified.

After the reduction, if necessary, the solvent or the like remaining in the primary support is preferably removed by heating or the like.

In process (1), by appropriately setting the concentration of the platinum in the solution containing platinum, the immersion time, the reduction condition, and the like, the supported amount of the platinum on the support can be controlled.

Process (2)

The process (2) is a process of manufacturing a secondary support by immersing the primary support manufactured in the process (1) into a solution containing cobalt.

The solution containing the cobalt includes a cobalt-containing compound and a solvent.

The cobalt-containing compound is appropriately selected according to to-be-manufactured alloy particles. The cobalt-containing compound is not particularly limited, but cobalt chloride, cobalt hydroxide, and the like may be exemplified.

As the above-described solvent, water and the like may be exemplified.

The concentration of cobalt in a solution containing the cobalt is preferably in a range of 0.1 to 50 mass%, more preferably in a range of 0.5 to 20 mass%.

By immersing a primary support into the solution containing the cobalt, a secondary support supporting the platinum and the cobalt can be manufactured.

After the immersion, if necessary, the solvent or the like remaining in the secondary support is preferably removed by heating or the like.

In the process (2), by appropriately setting the concentration of the cobalt in the solution containing the cobalt and the immersion time, the supported amount of the cobalt on the primary support can be controlled.

Process (3)

The process (3) is a process of forming an alloy of the platinum and the alloy other than the platinum on the secondary support manufactured in the process (2).

A specific method of forming an alloy is not particularly limited, but a well-known method can be appropriately employed. For example, a method of heating in a 100% hydrogen gas or the like can be exemplified.

In addition, when the alloy particles are intended to be supported inside the support by using the support of the related art by the method according to the embodiment, since the metals other than the platinum are difficult to enter into the support in the above-described process (2), the alloy particles with a desired alloy-formation ratio (particularly, alloy particles with a low ratio of the platinum) cannot be obtained. As a result, the ratio of the platinum as the catalyst is increased, and it is difficult to lower the cost.

However, in the case of using the support used for the catalyst layer according to the present invention, specifically, the support of which the radius and mode radius of the mesopores are controlled, the cobalt can appropriately enter into the support in comparison with the support of the related art. As a result, a desired alloy-formation ratio can be achieved, so that the catalyst where the alloy particles with a desired composition are supported can be obtained.

In addition, it can be determined based on the alloy-formation ratio expressed by the following Formula whether or not the alloy particles are obtained with a desired composition.

[Formula 1]

Alloy - Formation Ratio = (Platinum Content Ratio of Manufactured Alloy Particles) ÷ (Desired Platinum Content Ratio of Alloy Particles) = (Platinum Ratio/Ratio of Metals Other Than Platinum) ÷ (Platinum Ratio with Desired Composition/Ratio of Metals Other Than Platinum)

In the above Formula, it can be stated that, as the alloy-formation ratio is closer to 1, the alloy particles with a desired composition can be further obtained.

In addition, in another embodiment, in the above-described impregnation method, alloy metals may be supported on the support according to an immersion method including a process of manufacturing alloy particles by performing alloy formation on platinum and cobalt and a process of immersing the support into a solution containing the alloy particles.

Subsequently, a catalyst ink containing the catalyst powder, polymer electrolyte, and a solvent is prepared. As the solvent, there is no particular limitation. A typical solvent used for forming a catalyst layer may be similarly used. Specifically, water such as tap water, pure water, ion-exchanged water, distilled water, cyclohexanol, a lower alcohol having 1 to 4 carbons such as methanol, ethanol, n-propanol, isopropanol, n-butanol, sec-butanol, isobutanol, and tert-butanol, propylene glycol, benzene, toluene, xylene, or the like may be used. Besides, acetic acid butyl alcohol, dimethyl ether, ethylene glycol, or the like may be used as a solvent. These solvents may be used alone or may be used in a state of a mixture of two or more solvents.

An amount of solvent for preparing the catalyst ink is not particularly limited so long as the electrolyte can be completely dissolved. Specifically, a concentration (a solid content) of the catalyst powder and the polymer electrolyte is preferably in the range of 1 to 50 wt% in the electrode catalyst ink, more preferably in the range of about 5 to 30 wt%.

In the case of using an additive such as a water repellent, a dispersant, a thickener, and a pore-forming agent, the additive may be added to the catalyst ink. In this case, an added amount of the additive is not particularly limited so long as it does not interfere with the above-described effects by the present invention. For example, the added amount of the additive is preferably in the range of 5 to 20 wt%, with respect to the total weight of the electrode catalyst ink.

Next, a surface of a substrate is coated with the catalyst ink. A method of coating the substrate is not particularly limited, but a well-known method may be used. Specifically, a well-known method such as a spray (spray coat) method, a Gulliver printing method, a die coater method, a screen printing method, or a doctor blade method can be used.

As the substrate coated with the catalyst ink, a solid polymer electrolyte membrane (electrolyte layer) or a gas diffusion substrate (gas diffusion layer) may be used. In this case, after the catalyst layer is formed on a surface of a solid polymer electrolyte membrane (electrolyte layer) or a gas diffusion substrate (gas diffusion layer), the resultant laminate may be used as it is for manufacturing a membrane electrode assembly. Alternatively, as the substrate, a peelable substrate such as a polytetrafluoroethylene (PTFE) [Teflon (registered trademark)] sheet can be used, and after a catalyst layer is formed on the substrate, the catalyst layer portion can be peeled off from the substrate, so that the catalyst layer may be obtained.

Finally, the coat layer (film) of the catalyst ink is dried under an air ambience or under an inert gas ambience at a temperature ranging from room temperature to 150°C for a time ranging from 1 to 60 minutes. By this, the catalyst layer can be formed.

(Membrane Electrode Assembly)

According to another embodiment of the present invention, provided is a membrane electrode assembly for a fuel cell including the above-described cathode catalyst layer for fuel cell. Namely, provided is a membrane electrode assembly for fuel cell which comprises a solid polymer electrolyte membrane 2, a cathode catalyst layer disposed on one side of the electrolyte membrane, an anode catalyst layer disposed on the other side of the electrolyte membrane, and a pair of gas diffusion layers (4a, 4c) interposing the electrolyte membrane 2, the anode catalyst layer 3a, and the cathode catalyst layer 3c.

By taking into consideration necessity of improved proton conductivity and improved transport characteristic (gas diffusibility) of a reaction gas (particularly, $O_2$), at least the cathode catalyst layer is the catalyst layer according to the embodiment described above.

Hereinafter, members of a PEFC 1 using the catalyst layer according to the embodiment will be described with reference to Fig. 1. However, the present invention has features with respect to the cathode catalyst layer. Therefore, among members constituting the fuel cell, specific forms of members other than the cathode catalyst layer may be appropriately modified with reference to well-known knowledge in the art.

(Electrolyte Membrane)

An electrolyte membrane is configured with a solid polymer electrolyte membrane 2 in the same form illustrated in, for example, Fig. 1. The solid polymer electrolyte membrane 2 serves to selectively transmit protons generated in an anode catalyst layer 3a to a cathode catalyst layer 3c in the thickness direction during the operation of the PEFC 1. In addition, the solid polymer electrolyte membrane 2 also serves as a partition wall for preventing a fuel gas supplied to an anode side from being mixed with an oxidant gas supplied to a cathode side.

An electrolyte material constituting the solid polymer electrolyte membrane 2 is not particularly limited, but well-known knowledge in the art may be appropriately referred to. For example, the fluorine-based polymer electrolyte or the hydrocarbon-based polymer electrolyte described above as the polymer electrolyte can be used. There is no need to use the polymer electrolyte which is necessarily the same as the polymer electrolyte used for the catalyst layer.

A thickness of the electrolyte layer is not particularly limited, but it may be determined by taking into consideration characteristics of the obtained fuel cell. The thickness of the electrolyte layer is typically in the range of about 5 to 300 μm. If the thickness of the electrolyte layer is within such a range, balance between strength during the film formation or durability during the use and output characteristics during the use can be appropriately controlled.

(Gas Diffusion Layer)

A gas diffusion layer (anode gas diffusion layer 4a, cathode gas diffusion layer 4c) serves to facilitate diffusion of a gas (fuel gas or oxidant gas) supplied through a gas passage (6a, 6c) of a separator to a catalyst layer (3a, 3c) and also serves as an electron conducting path.

A material constituting a substrate of the gas diffusion layers (4a, 4c) is not particularly limited, but well-known knowledge in the related art may be appropriately referred to. For example, a sheet-shaped material having conductivity and porous property such as a fabric made of carbon, a sheet-shaped paper, felt, and a nonwoven fabric may be exemplified.

A thickness of the substrate may be appropriately determined by considering characteristics of the obtained gas diffusion layer. The thickness of the substrate may be in the range of about 30 to 500 μm. If the thickness of the substrate is within such a range, balance between mechanical strength and diffusibility of gas, water, and the like can be appropriately controlled.

The gas diffusion layer preferably includes a water repellent for the purpose of preventing a flooding phenomenon or the like by improving water repellent property. The water repellent is not particularly limited, but fluorine-based polymer materials such as polytetrafluoroethylene (PTFE), polyvinylidene fluoride (PVdF), polyhexafluoropropylene, and tetrafluoroethylene-hexafluoropropylene copolymer (FEP), polypropylene, polyethylene, and the like may be exemplified.

In order to further improve water repellent property, the gas diffusion layer may include a carbon particle layer (microporous layer (MPL), not shown) configured with an assembly of carbon particles including a water repellent provided at the catalyst-layer side of the substrate.

Carbon particles included in the carbon particle layer are not particularly limited, but well-known materials in the art such as carbon black, graphite, and expandable graphite may be appropriately employed. Among the materials, due to excellent electron conductivity and a large specific surface area, carbon black such as oil furnace black, channel black, lamp black, thermal black, and acetylene black can be preferably used.

An average particle diameter of the carbon particles may be set to be in the range of about 10 to 100 nm. By this, high water-repellent property by a capillary force can be obtained, and contacting property with the catalyst layer can be improved.

As the water repellent used for the carbon particle layer, the above-described water repellent may be exemplified. Among the materials, due to excellent water repellent property and excellent corrosion resistance during the electrode reaction, the fluorine-based polymer material can be preferably used.

A mixing ratio of the carbon particles and the water repellent in the carbon particle layer may be set to be in the range of weight ratio of about 90:10 to 40:60 (carbon particle: water repellent) by taking into consideration balance between water repellent property and electron conductivity. Meanwhile, a thickness of the carbon particle layer is not particularly limited, but it may be appropriately determined by taking into consideration water repellent property of the obtained gas diffusion layer.

(Method of Manufacturing Membrane Electrode Assembly)

A method of manufacturing a membrane electrode assembly is not particularly limited, and a well-known method in the art may be used. For example, a method which comprises transferring a catalyst layer to a solid polymer electrolyte membrane by using a hot press, or coating a solid polymer electrolyte membrane with a catalyst layer and drying the coating, and joining the resulting laminate with gas diffusion layers, or a method which comprises coating a microporous layer (in the case of not including a microporous layer, one surface of a substrate layer) of a gas diffusion layer with a catalyst layer in advance and drying the resulting product to produce two gas diffusion electrodes (GDEs), and joining both surfaces of the solid polymer electrolyte membrane with the two gas diffusion electrodes by using a hot press can be used. The coating and joining conditions by hot press and the like may be appropriately adjusted according to a type of the polymer electrolyte (perfluorosulfonic acid-based or hydrocarbon-based) in the solid polymer electrolyte membrane or the catalyst layer.

(Separator)

In the case of configuring a fuel cell stack by connecting a plurality of unit fuel cells of polymer electrolyte fuel cells in series, a separator serves to electrically connect the cells in series. The separator also serves as a partition wall for separating a fuel gas, an oxidant gas, and a coolant from each other. In order to secure a passage thereof, as described above, gas passages and coolant passages are preferably installed in each of the separators. As a material constituting the separator, well-known materials in the art of carbon such as dense carbon graphite and a carbon plate, a metal such as a stainless steel, or the like can be employed without limitation. A thickness or size of the separator, a shape or size of the installed passages, and the like are not particularly limited, but they can be appropriately determined by taking into consideration desired output characteristics and the like of the obtained fuel cell.

A manufacturing method for the fuel cell is not particularly limited, and well-known knowledge in the art in the field of fuel cell may be appropriately referred to.

Furthermore, in order that the fuel cell can generate a desired voltage, a fuel cell stack may be formed by connecting a plurality of membrane electrode assemblies in series through a separator. A shape and the like of the fuel cell are not particularly limited, and they may be appropriately determined so as to obtain desired cell characteristics such as a voltage.

Since the above-described PEFC or membrane electrode assembly uses the catalyst layer having an excellent durability, the PEFC or membrane electrode assembly has an excellent durability. In addition, by using the above-described catalyst layer, it is possible to lower the cost of the PEFC.

The PEFC according to the embodiment or a fuel cell stack using the PEFC can be installed, for example, as a driving power supply for a vehicle.

Example

The effects of the present invention will be described with reference to the following Examples and Comparative Examples.

<Manufacturing of Support>

[Synthesis Example 1]

A support A having a mode radius of mesopores of 6.1 nm and a pore volume of mesopores of 0.95 cc/g support was manufactured. Specifically, heat treatment was performed on a composite obtained by mixing a magnesium oxide having an average crystallite size of 10 nm and a thermoplastic resin with 3 : 7 of mass ratio under a nitrogen ambience at 900°C, and after that, the resulting product was washed with dilute sulfuric acid and drying is performed, so that the support A was manufactured.

[Synthesis Example 2]

A support B having a mode radius of mesopores of 2.4 nm and a pore volume of mesopores of 1.53 cc/g support was manufactured. Specifically, heat treatment was performed on a composite obtained by mixing a magnesium oxide having an average crystallite size of 5 nm and a thermoplastic resin with 2 : 8 of mass ratio under a nitrogen ambience at 900°C, and after that, the resulting product was washed with dilute sulfuric acid and drying is performed, so that the support B was manufactured.

[Synthesis Example 3]

Black pearls (registered trademark) 2000 (pore volume of the mesopores: 0.49 cc/g support, having no clear mode diameter of the mesopores, produced by Cabot) was prepared as a support C.

[Synthesis Example 4]

Ketjen Black EC300J (pore volume of the mesopores: 0.39 cc/g support, having no clear mode diameter of the mesopores mode diameter, produced by Ketjen Black International) was prepared as a support D.

<Manufacturing of Catalyst>

[Example 1]

In the case of supporting the alloy particles on the surface of the support disclosed in Patent Literature 1, a catalyst was manufactured in a condition that a compounding ratio of platinum and cobalt was 3 : 1. Namely, the catalyst was manufactured by setting a desired composition ratio of platinum and cobalt to 3 : 1.
More specifically, 12 g of the support A manufactured in Synthesis Example 1 was immersed into a solution containing platinum, and stirring was performed. Next, the solution was stirred and mixed at a boiling point (about 95°C) for 7 hours, and after that, filtering and drying were performed, so that a primary support was manufactured. At this time, the solution containing platinum used above was 1000 g (platinum content: 8 g) of a dinitrodiammine platinum nitric acid solution having a platinum concentration of 0.8 mass%.
Next, 10 g of the primary support obtained above was immersed into a solution containing cobalt, and stirring was performed for 1 hour. Next, the resulting solution was dried at 60°C, so that a secondary support was manufactured. At this time, the solution containing cobalt used above was 60 g (cobalt content: 0.4 g) of an aqueous cobalt chloride solution having a cobalt concentration of 0.66 mass%.
Finally, the alloy formation process was performed in 100% of hydrogen gas at 1000°C for 2 hours, so that a catalyst was manufactured.
In addition, with respect to the obtained catalyst, the mode radius of the mesopores and the pore volume of the mesopores were measured by a nitrogen adsorption method (DH method), and the values were 6.1 nm and 0.81 cc/g support, respectively.
In addition, the supported amount of the alloy particles was measured by an ICP-MS (inductively coupled plasma mass spectrometer), and the value was 30 wt%.

[Comparative Example 1]

Except for using the support B manufactured in Synthesis Example 2, the same method as that of Example 1 was performed, so that a catalyst was manufactured.

In addition, the mode radius of the mesopores, the pore volume of the mesopores and the supported amount of the alloy particles were measured by the same method as that of Example 1, and the values were 2.1 nm, 1.35 cc/g support, and 30 wt%, respectively.

[Comparative Example 2]

Except for using the support C manufactured in Synthesis Example 3, the same method as that of Example 1 was performed, so that a catalyst was manufactured.
In addition, the pore volume of the mesopores and the supported amount of the alloy particles were measured by the same method as that of Example 1, and the values were 0.49 cc/g support and 30 wt%, respectively. In addition, with respect to the catalyst, clear mode diameter of the mesopores was not observed.

[Comparative Example 3]

Except for using the support C of Synthesis Example 3 and changing the dinitrodiammine platinum nitric acid solution to 600 g (platinum content: 4.8 g) and changing the aqueous cobalt chloride solution to 36 g (cobalt content: 0.24 g), the same method as that of Example 1 was performed, so that a catalyst was manufactured.
In addition, the pore volume of the mesopores and the supported amount of the alloy particles were measured by the same method as that of Example 1, and the values were 0.36 cc/g support and 50 wt%, respectively. In addition, with respect to the catalyst, clear mode diameter of the mesopores is not observed.

[Comparative Example 4]

Except for using the support D of Synthesis Example 4, the same method as that of Example 1 was performed, so that a catalyst was manufactured.
In addition, the pore volume of the mesopores and the supported amount of the alloy particles were measured by the same method as that of Example 1, and the values were 0.36 cc/g support and 50 wt%, respectively. In addition, with respect to the catalyst, clear mode diameter of the mesopores was not observed.
The catalysts manufactured in Example 1 and Comparative Examples 1 to 4 are listed in Table 1.

[Table 1]

| | Support (Before Supporting of Alloy Particles) | | | Catalyst (After Supporting of Alloy Particles) | | |
|---|---|---|---|---|---|---|
| | Type of Support | Mode Radius of Mesopore (nm) | Pore Volume of Mesopore (cc/g support) | Mode Radius of Mesopore (nm) | Pore Volume of Mesopore (cc/g support) | Supported Amount of Alloy Particles (wt%) |
| Example 1 | Support A | 6.1 | 0.95 | 6.1 | 0.81 | 30 |
| Comparative Example 1 | Support B | 2.4 | 1.53 | 2.1 | 1.35 | 30 |
| Comparative Example 2 | Support C | None | 0.49 | None | 0.49 | 30 |
| Comparative Example 3 | Support C | None | 0.49 | None | 0.36 | 50 |
| Comparative Example 4 | Support D | None | 0.39 | None | 0.36 | 50 |

<Performance Evaluation>

Performance evaluation was performed on the catalysts manufactured in Example 1 and Comparative Examples 1 to 4.

[Measurement of Alloy-Formation Ratio]

The composition of the alloy particles of the manufactured catalyst was measured by an ICP-MS (inductively coupled plasma mass spectrometer).

In Examples and Comparative Examples, since the condition is set so that the compounding ratio of platinum and cobalt is 3 : 1, it was evaluated based on the compounding amount of the platinum in the alloy particles by using the following Formula whether or not an alloy with a desired composition was able to be obtained.

[Formula 2]

Alloy - Formation Ratio = (Platinum Content Ratio of Manufactured Alloy Particles) ÷ (Desired Platinum Content Ratio of Alloy Particles) = (Platinum Ratio/Cobalt Ratio) ÷ (3/1)

The obtained results are listed in the following Table 2.

[Table 2]

| | Catalyst (After Supporting of Alloy Particles) | | | Alloy-Formation Ratio |
| --- | --- | --- | --- | --- |
| | Mode Radius of Mesopore (nm) | Pore Volume of Mesopore (cc/g support) | Supported Amount of Alloy Particles (wt%) | |
| Example 1 | 6.1 | 0.81 | 30 | 1.004 |
| Comparative Example 1 | 2.1 | 1.35 | 30 | 1.521 |
| Comparative Example 2 | None | 0.49 | 30 | 1.367 |
| Comparative Example 3 | None | 0.36 | 50 | 1.127 |
| Comparative Example 4 | None | 0.36 | 50 | 0.917 |

In Table 2, in Example 1 where the catalyst is manufactured so that the catalyst including the mesopores having a radius of 1 to 10 nm originated from the support and the mode radius of the mesopores is in a range of 2.5 to 10 nm, the alloy-formation ratio is very close to 1. Namely, it is found out that, in the catalyst of Example 1, the alloy particles with a desired composition (platinum : cobalt = 3 : 1) are supported.

On the contrary, for example, in the catalyst of Comparative Example 1, in the case where the mode diameter of the mesopores is as small as 2.1 nm, the alloy-formation ratio has a high value (1.5) . Namely, it is found out that the alloy particles are supported in the obtained catalyst with a compounding ratio of platinum and cobalt of 4.5 : 1, so that the alloy particles with a desired composition (platinum : cobalt = 3 : 1) cannot be obtained.

1       Solid polymer electrolyte fuel cell (PEFC)
2       Solid polymer electrolyte membrane
3a      Anode catalyst layer
3c      Cathode catalyst layer
4a      Anode gas diffusion layer
4c      Cathode gas diffusion layer
5a      Anode separator
5c      Cathode separator
6a      Anode gas passage
6c      Cathode gas passage
7       Coolant passage
10      Membrane electrode assembly (MEA)
20      Catalyst
22      Alloy particle

23 Support
24 Mesopore
25 Electrolyte

**Claims**

1. A cathode catalyst layer for a fuel cell, comprising a catalyst (20) and an electrolyte (25), wherein the catalyst (20) comprises:

   a support (23); and
   alloy particles (22) including platinum and cobalt supported on the support (23);
   wherein the catalyst includes mesopores (24) having a radius of 1 to 10 nm originated from the support (23), the pore radius of the mesopores denoting the radius of the pores measured by a nitrogen adsorption method, DH method;
   wherein a mode radius of the mesopores (24) after supporting of the alloy particles (22) is in a range of 5 to 10 nm, the mode radius of the mesopores denoting a pore radius taking a peak value, being a maximum frequency, in a differential pore distribution curve obtained by the nitrogen adsorption method, DH method;
   wherein a compounding ratio of the platinum and the cobalt is in a range of 4 : 1 to 1 : 1 expressed in molar ratio; and
   wherein the alloy particles (22) have a catalyst function, and at least a portion of the alloy particles (22) is supported inside the mesopores (24).

2. The cathode catalyst layer according to claim 1, wherein the catalyst (20) has a pore volume of the mesopores (24) after supporting of the alloy particles (22) in a range of 0.6 to 1.5 cc/g support,
   wherein the pore volume of the mesopores denotes a total volume of the mesopores having a radius of 1 to 10 nm of the support existing in the catalyst and is expressed by volume per 1 g of support, and the pore volume of the mesopores in cc/g support is calculated as an area, being an integration value, under a differential pore distribution curve obtained according to a nitrogen adsorption method, DH method.

3. The cathode catalyst layer according to any one of claims 1 or 2, wherein the catalyst (20) has a supported amount of the alloy particles (22) of 40 wt% or less.

4. The cathode catalyst layer according to any one of claims 1 to 3, wherein a BET specific surface area of the catalyst (20) after supporting of the alloy particles (22) is in the range of 1100 to 1800 $m^2$/g support, the BET specific surface area being measured by a nitrogen adsorption method.

5. A membrane electrode assembly for a fuel cell including a cathode catalyst layer according to any one of claims 1 to 4.

6. Use of a catalyst layer comprising a catalyst (20) and an electrolyte (25), wherein the catalyst (20) comprises:

   a support (23); and
   alloy particles (22) including platinum and cobalt supported on the support (23);
   wherein the catalyst includes mesopores (24) having a radius of 1 to 10 nm originated from the support (23), the pore radius of the mesopores denoting the radius of the pores measured by a nitrogen adsorption method, DH method;
   wherein a mode radius of the mesopores (24) after supporting of the alloy particles (22) is in a range of 5 to 10 nm, the mode radius of the mesopores denoting a pore radius taking a peak value, being a maximum frequency, in a differential pore distribution curve obtained by the nitrogen adsorption method, DH method;
   wherein a compounding ratio of the platinum and the cobalt is in a range of 4 : 1 to 1 : 1 expressed in molar ratio; and
   wherein the alloy particles (22) have a catalyst function, and at least a portion of the alloy particles (22) is supported inside the mesopores (24), for a cathode catalyst layer for a fuel cell.

**Patentansprüche**

1. Kathodenkatalysatorschicht für eine Brennstoffzelle, umfassend einen Katalysator (20) und einen Elektrolyten (25), wobei der Katalysator (20) umfasst:

einen Träger (23); und
Platin und Kobalt enthaltende Legierungspartikel (22), die auf dem Träger (23) getragen werden;
wobei der Katalysator Mesoporen (24) mit einem Radius von 1 bis 10 nm enthält, die vom Träger (23) erzeugt wurden, wobei der Porenradius der Mesoporen den Radius der Poren bezeichnet, der durch ein Stickstoffadsorptionsverfahren gemäß DH-Methode gemessen wird;
wobei der Modenradius der Mesoporen (24) einschließlich der getragenen Legierungspartikel (22) in einem Bereich von 5 bis 10 nm liegt, wobei der Modenradius der Mesoporen einen Porenradius bezeichnet, der ein Maximum, d. h. eine maximale Frequenz in einer differentiellen Porenverteilungskurve, die durch das Stickstoffadsorptionsverfahren gemäß DH-Methode erhalten wird, darstellt;
wobei das Mischungsverhältnis von Platin und Kobalt im Bereich von 4:1 bis 1:1, ausgedrückt als Molverhältnis, liegt; und
wobei die Legierungspartikel (22) eine Katalysatorfunktion haben und mindestens ein Teil der Legierungspartikel (22) innerhalb der Mesoporen (24) getragen wird.

2. Kathodenkatalysatorschicht nach Anspruch 1, wobei der Katalysator (20) mit den getragenen Legierungspartikeln (22) ein Porenvolumen der Mesoporen (24) in einem Bereich von 0,6 bis 1,5 cm$^3$/g Träger aufweist, wobei das Porenvolumen der Mesoporen ein Gesamtvolumen der Mesoporen mit einem Radius von 1 bis 10 nm des im Katalysator vorhandenen Trägers bezeichnet und als Volumen pro 1 g Träger ausgedrückt wird, und das Porenvolumen der Mesoporen in cm$^3$/g Träger als Fläche berechnet wird, die ein Integrationswert unter einer durch ein Stickstoffadsorptionsverfahren gemäß DH-Methode erhaltenen differentiellen Porenverteilungskurve darstellt.

3. Kathodenkatalysatorschicht nach einem der Ansprüche 1 oder 2, wobei der Katalysator (20) Legierungspartikel (22) in einer Menge von 40 Gew.-% oder weniger trägt.

4. Kathodenkatalysatorschicht nach einem der Ansprüche 1 bis 3, wobei die spezifische BET-Oberfläche des Katalysators (20) einschließlich der getragenen Legierungspartikel (22) im Bereich von 1100 bis 1800 m$^2$/g Träger liegt, wobei die spezifische BET-Oberfläche gemäß einem Stickstoffadsorptionsverfahren gemessen wird.

5. Membranelektrodenanordnung für eine Brennstoffzelle mit einer Kathodenkatalysatorschicht nach einem der Ansprüche 1 bis 4.

6. Verwendung einer Katalysatorschicht umfassend einen Katalysator (20) und einen Elektrolyten (25) als Kathodenkatalysatorschicht für eine Brennstoffzelle, wobei der Katalysator (20) umfasst:

einen Träger (23); und
Platin und Kobalt enthaltende Legierungspartikel (22), die auf dem Träger (23) getragen werden;
wobei der Katalysator Mesoporen (24) mit einem Radius von 1 bis 10 nm enthält, die vom Träger (23) erzeugt wurden, wobei der Porenradius der Mesoporen den Radius der Poren bezeichnet, der durch ein Stickstoffadsorptionsverfahren gemäß DH-Methode gemessen wird;
wobei der Modenradius der Mesoporen (24) einschließlich der getragenen Legierungspartikel (22) in einem Bereich von 5 bis 10 nm liegt, wobei der Modenradius der Mesoporen einen Porenradius bezeichnet, der ein Maximum, d. h. eine maximale Frequenz in einer differentiellen Porenverteilungskurve, die durch das Stickstoffadsorptionsverfahren gemäß DH-Methode erhalten wird, darstellt;
wobei das Mischungsverhältnis von Platin und Kobalt im Bereich von 4:1 bis 1:1, ausgedrückt als Molverhältnis, liegt; und
wobei die Legierungspartikel (22) eine Katalysatorfunktion haben und mindestens ein Teil der Legierungspartikel (22) innerhalb der Mesoporen (24) getragen wird

**Revendications**

1. Couche de catalyseur cathodique pour une pile à combustible, comprenant un catalyseur (20) et un électrolyte (25), dans laquelle le catalyseur (20) comprend:

un support (23; et
des particules d'alliage (22) comprenant du platine et du cobalt supportées sur le support (23);

dans laquelle le catalyseur comprend des mésopores (24) ayant un rayon de 1 à 10 nm provenant du support (23), le rayon des pores des mésopores indiquant le rayon des pores mesuré par un procédé d'adsorption d'azote, procédé DH;

dans laquelle un rayon de mode des mésopores (24) après support des particules d'alliage (22) est dans une plage de 5 à 10 nm, le rayon de mode des mésopores désignant un rayon de pore prenant une valeur de pic, étant une fréquence maximale, dans une courbe différentielle de distribution des pores obtenue par le procédé d'adsorption d'azote, procédé DH;

dans laquelle un rapport de composition du platine et du cobalt est compris entre 4:1 et 1:1, exprimé en rapport molaire; et

dans laquelle les particules d'alliage (22) ont une fonction de catalyseur, et au moins une partie des particules d'alliage (22) est supportée à l'intérieur des mésopores (24).

2. Couche de catalyseur cathodique selon la revendication 1, dans laquelle le catalyseur (20) présente un volume de pores des mésopores (24) après support des particules d'alliage (22) dans une plage de 0,6 à 1,5 cc/g support, dans laquelle le volume des pores des mésopores désigne un volume total des mésopores ayant un rayon de 1 à 10 nm du support existant dans le catalyseur et est exprimé en volume pour 1 g de support, et le volume des pores des mésopores dans le support cc/g est calculé comme une superficie, étant une valeur d'intégration, sous une courbe différentielle de distribution des pores obtenue selon un procédé d'adsorption d'azote, procédé DH.

3. Couche de catalyseur cathodique selon l'une quelconque des revendications 1 ou 2, dans laquelle le catalyseur (20) a une quantité supportée des particules d'alliage (22) de 40 % en poids ou moins.

4. Couche de catalyseur cathodique selon l'une quelconque des revendications 1 à 3, dans laquelle une surface spécifique BET du catalyseur (20) après support des particules d'alliage (22) se situe dans la plage de 1100 à 1800 m$^2$/g du support, la surface spécifique BET étant mesurée par un procédé d'adsorption d'azote.

5. Ensemble d'électrode à membrane pour une pile à combustible comprenant une couche de catalyseur cathodique selon l'une quelconque des revendications 1 à 4.

6. Utilisation d'une couche de catalyseur comprenant un catalyseur (20) et un électrolyte (25), dans laquelle le catalyseur (20) comprend:

un support (23; et
des particules d'alliage (22) comprenant du platine et du cobalt supportées sur le support (23);
dans laquelle le catalyseur comprend des mésopores (24) ayant un rayon de 1 à 10 nm provenant du support (23), le rayon des pores des mésopores indiquant le rayon des pores mesuré par un procédé d'adsorption d'azote, procédé DH;
dans laquelle un rayon de mode des mésopores (24) après support des particules d'alliage (22) est dans une plage de 5 à 10 nm, le rayon de mode des mésopores désignant un rayon de pore prenant une valeur de pic, étant une fréquence maximale, dans une courbe différentielle de distribution des pores obtenue par le procédé d'adsorption d'azote, procédé DH;
dans laquelle un rapport de composition du platine et du cobalt est compris entre 4:1 et 1:1, exprimé en rapport molaire; et
dans laquelle les particules d'alliage (22) ont une fonction de catalyseur, et au moins une partie des particules d'alliage (22) est supportée à l'intérieur des mésopores (24), pour une couche de catalyseur de cathode pour une pile à combustible.

# FIG.1

<u>1</u>

# FIG.2

<u>20</u>

20nm

FIG.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003142112 A
- US 2009239115 A1
- US 2003153636 A1
- JP 2010208887 A
- US 20110318254 A

**Non-patent literature cited in the description**

- Catalysts for the Proton Exchange Membrane Fuel Cell. **D. THOMPSETT.** Fuel Cell Technology Handbook. CRC Press, 2003
- **KONDO SEIICHI ; ISHIKAWA TATSUO ; ABE IKUO.** Science of Adsorption. Maruzen Co., Ltd,
- **TAKASU YOSHIO ; YOSHITAKE YU ; ISHIHARA TATSUMI.** Fuel Cell Analysis Method. KAGAKU DOJIN
- **D. DOLLION ; G. R. HEAL.** *J. Appl. Chem.,* 1964, vol. 14, 109